Europäisches Patentamt

European Patent Office

Office européen des brevets

(19)

(11) Veröffentlichungsnummer: **0 226 052**
**A2**

(12) **EUROPÄISCHE PATENTANMELDUNG**

(21) Anmeldenummer: **86115799.8**

(22) Anmeldetag: **13.11.86**

(51) Int. Cl.⁴: **F 03 D 1/06**

(30) Priorität: **18.12.85 DE 3544814**

(43) Veröffentlichungstag der Anmeldung:
**24.06.87 Patentblatt 87/26**

(84) Benannte Vertragsstaaten:
**AT BE CH ES FR GB GR IT LI NL SE**

(71) Anmelder: **MAN GUTEHOFFNUNGSHÜTTE GMBH**
**Bahnhofstrasse, 66 Postfach 11 02 40**
**D-4200 Oberhausen 11(DE)**

(72) Erfinder: **Herrmann, Hans-Joachim**
**Backenfeldsteig 40**
**D-8540 Schwabach(DE)**

(54) **Mehrblattrotor für eine Windkraftanlage.**

(57) Die Erfindung bezieht sich auf einen Mehrblattrotor für eine Windkraftanlage, mit einer auf einer Welle oder feststehenden Achse gestutzen Nabe und mit über Lager um die Blattlängsachse drehbar mit der Nabe verbundenen Rotorblättern. Eine leicht herstellbare, und sich durch relativ geringes Gewicht auszeichnende Nabe wird erfindungsgemäß dadurch erreicht, daß die Nabe der Zahl der Rotorblätter entsprechende rotationssymmetrische Hohlkörper aufweist, daß die Hohlkörper auf ihrer Anzahl entsprechenden, stab oder rohrförmigen und über Lagerschilde auf der Achse oder Welle gelagerten Druckkörpern, deren Längsmittelachsen jeweils im oder nahezu im Schwerpunkt der Biegemomentenfläche des zugehörigen Hohlkörpers liegen, gelagert sind, daß die Hohlkörper über ein sternförmig ausgebildetes Zugankersystem mit vorgespannten, in oder nahezu in den Symmetrieachse der Hohlkörper sich erstreckenden Zugstangen zusammengehalten sind, und daß die Zugstangen auf einen die Hohlkörper nur auf Druck beanspruchenden Wert vorgespannt sind.

EP 0 226 052 A2

sk/ja

MAN GUTEHOFFNUNGSHÜTTE GMBH


Nürnberg, 4.11.1986


Mehrblattrotor für eine Windkraftanlage


Die Erfindung bezieht sich auf einen Mehrblattrotor für eine Windkraftanlage, mit einer auf einer Welle oder feststehenden Achse gestützten Nabe und mit über Lager um die Blattlängsachse drehbar mit der Nabe verbundenen Rotorblättern.


In einer Windkraftanlage treten neben Windbelastungen noch zyklisch einwirkende Kräfte und Momente auf, die durch den sich drehenden Rotor hervorgerufen werden. Die aus der Umdrehung des Rotors resultierenden Belastungen sind im wesentlichen von dem Gewicht der Rotorblätter hervorgerufene Biegewechselbeanspruchungen, die mit jeder Rotorumdrehung während der gesamten Lebensdauer auftreten und in der Regel mehr als $1 \times 10^8$ Lastwechsel ergeben. Da vom Werkstoff aufgrund von Kerben ( Gewindebohrungen, Löcher, Nuten usw.), Formeinflüssen aus Guß- und Schweißteilkonturen, sowie von Werkstoff-Inhomogenität nur relativ niedrige Spannungsamplituden ertragen werden können, sind für solche Biegewechselbeanspruchungen ausgesetzten Bauteile ( Nabe, Rotorblattanschluß) große Wanddicken, und damit große Massen erforderlich, die für die Dimensionierung der gesamten Windkraftanlage bestimmend sind und der Forderung nach einer optimalen, wirtschaftlich vertretbaren Konstruktion entgegenstehen.


'RP 03.8917                                                    ./.

- 4 -

0226052

Der Erfindung liegt daher die Aufgabe zugrunde, einen Mehrblattrotor der eingangs genannten Art zu schaffen, dessen Nabe leicht
herstellbar ist und sich durch relativ geringes Gewicht auszeichnet.

Diese Aufgabe wird erfindungsgemäß dadurch gelöst, daß die Nabe
der Zahl der Rotorblätter entsprecehnde rotationssymmetrische
Hohlkörper ausweist, daß die Hohlkörper auf ihrer Anzahl entsprechenden, stab- oder rohrförmigen und über Lagerschilde auf
der Achse oder Welle gelagerten Druckkörpern, deren Längsmittelachsen jeweils im oder nahezu im Schwerpunkt der Biegemomentenfläche des zugehörigen Hohlkörpers liegen, gelagert sind, daß die
Hohlkörper über ein sternförmig ausgebildetes Zugankersystem mit
vorgespannten, in oder nahezu in der Symmetrieachse der Hohlkörper
sich erstreckenden Zugstangen zusammengehalten sind, und daß die
Zugstangen auf einen die Hohlkörper nur auf Druck beanspruchenden
Wert vorgespannt sind. - Aufgrund der schraub- und kerbfrei zusammengefügten, entsprechend vorgespannten Nabenbauteile, ist es
möglich, die Nabenkonstruktion nur im Druckbereich zu beanspruchen;
die Nabenkonstruktion kann schwellend mit hohen Amplituden auf Dauer
beansprucht werden, wobei das auf Zug beanspruchte Zugankersystem -
da in den neutralen Achsen der Hohlkörper verlaufend - annähernd frei
von Biegung ist, so daß es relativ niedrige Spannungsamplituden aufzunehmen
hat. Der erfindungsgemäße Vorschlag ermöglicht daher extreme Leichtbauweise im Dauerfestigkeitsbereich, was kostengünstig auf die gesamte Windkraftanlage wirkt. Außerdem ist die Betriebssicherheit
relativ hoch, da Risse von nur auf Druck beanspruchten Bauteilen
nicht zu spontanem Bruch führen. Außerdem ist der Zusammenbau
der- aus mehreren kleineren Teilen bestehenden - Nabe vor Ort möglich.
Schließlich können die einfachen Nabenteile auch leicht als Teile
mit glatten Oberflächen ausgeführt werden, was den Korrosionsschutz
erleichtert.

./.

03.8917

In weiterer vorteilhafter Ausgestaltung der Erfindung sind zwischen dem Zugankersystem und den die Basis der Rotorblätter bildenden Flanschen Drucklager sowie kegelstumpfmantelartig angeordnete Stäbe, Rohre, Schalen oder dergleichen angeordnet. - Durch diese Maßnahmen kann der Anschluß der Rotorblätter ohne Drehbewegungsbehinderung spielfrei erfolgen, so daß die Zerstörung der Blattlager durch Stöße vermieden wird.

Die hohen wechselnden Beanspruchungen im Druckbereich sind auch für die Rotorblätter nutzbar, wenn, gemäß einer Weiterbildung der Erfindung, der nebennahe Teil der Rotorblätter jeweils als Druckzylinder oder -kegel ausgebildet und über die Drehbarkeit der Rotorblätter zulassende, verdrillte, den äußeren Teil der Zugstangen bildende, lange Stäbe vorgespannt ist.

Zur Erhöhung der Sicherheit des Zentralankersystems sind die radialen Außenteile der Zugstangen durch mehrere Zugstäbe, die mit den nabennahen Innenteilen der Zugstangen fest verbunden sind, verbunden. - Der Bruch eines Zugstabes kann durch ein Sensorsignal angezeigt werden, so daß die Windkraftanlage darauf kontrolliert stillgesetzt werden kann.

Besonders einfach und kostengünstig gestaltet sich die Ausbildung der Rotorblattlager, da sie aus jeweils zwei Ringen und dazwischen angeordneten Wälzkörpern bestehen, wobei die äußeren und inneren Ringe starr mit den Rotorblättern bzw. Hohlkörpern verbunden sind.

In der Zeichnung ist ein Ausführungsbeispiel der Erfindung schematisch dargestellt. Es zeigt:

Fig. 1 eine Seitenansicht auf den erfindungsgemäßen Teil der Windkraftanlage und

Fig. 2 einen Schnitt gemäß der Linie II-II nach Fig. 1.

Mit 1 ist der Turmwandteil eines Turmes beziffert, auf dem der Rotorkopf 2 einer Windkraftanlage um die Turmlängsachse drehbar gelagert ist. An der Nabe des Rotorkopfes sind die Rotorblätter 3 um ihre Längsachse drehbar befestigt.

Die Nabe weist, beispielsweise drei, rotationssymmetrisch in Schalenbauweise gestaltete, sternförmig angeordnete Hohlkörper 4 auf, die die Form von Hohlzylindern, Hohlkegelstümpfen od. dgl. haben und jeweils gleich ausgebildet sind. Die - in der Zeichnung hohlzylindrisch dargestellten - Hohlkörper 4 sind an ihren radial inneren Enden mit je vier tunnelförmigen Ausnehmungen versehen, über die sich über drei stab- oder stangenförmige, waagrechte Druckkörper 5 gegenseitig abstützen. Die Hohl- und Druckkörper werden durch ein Zentralankersystem 6, 7, 8 mit Zugstangen 8, die (mittels bekannter Spannvorrichtungen mechanischer oder hydraulischer Art) so hoch vorgespannt werden, daß die Hohlkörper 4 nur im Druckbereich beansprucht werden, zusammengehalten. Das Zentralankersystem weist einen - entsprechend der drei Rotorblätter - dreieckförmigen, im Innern der Hohlkörper 4 befindlichen, hohlen Zentralteil 6, durch dessen zentrale Ausnehmung 7 die feststehende waagrechte Achse 9 des Rotors geführt ist, sowie die bereits erwähnten Zugstangen 8 auf, die vom Zentralteil 6 sich sternförmig radial nach außen erstrecken und so angeordnet sind, daß ihre Längsmittelachsen in der Symmetrieachse der zugeordneten Hohlkörper 4 liegen.

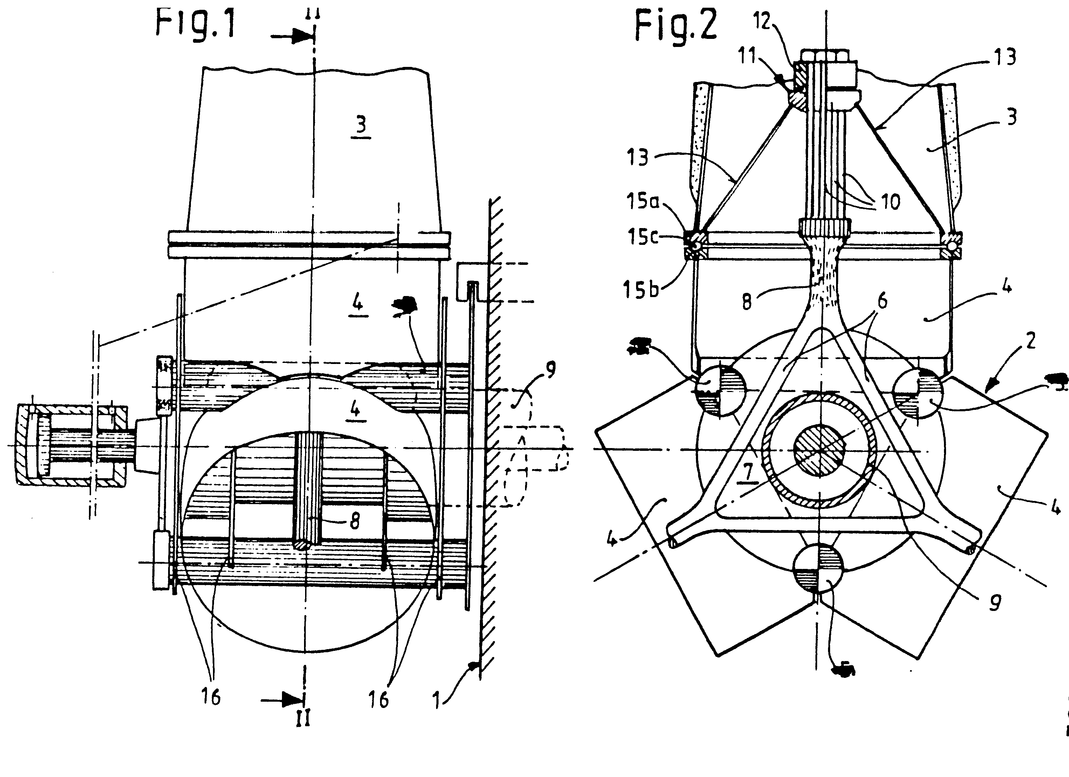

Jede Zugstange 8 ist - was nur bei einer der Zugstangen gezeichnet ist - direkt oder - wie in Figur 2 dargestellt - unter Zwischenschaltung von mehreren Zugstäben 10, die den radial äußeren Teil der Zugstangen 8 bilden, am radial äußeren Ring eines aus zwei Ringen und den dazwischen befindlichen Wälzkörpern bestehenden Drucklagers 11 befestigt bzw. über Zwischenmittel 12 darauf abgestützt. Der radial innere Ring jedes Drucklagers 11 - dessen Abmessungen im Vergleich zu den übrigen Abmessungen des Rotors relativ klein sind- ist über in der Kegelmantelfläche eines gedachten Hohlkegelstmpfes angeordnete Stäbe 13, kegelstumpfförmige Schalen od. dgl. unmittelbar oder mittelbar auf einem Flansch, der die Basis des zugeordneten Rotorblatts 3 bildet und mit diesem starr verbunden ist, abgestützt.

Es ist aber auch möglich, auf das Drucklager 11 zu verzichten, wenn man den nabennahen Teil jedes Rotorblatts 3 - z.B. über ein Drittel der Rotorblattlänge - als Druckzylinder oder Druckkegel ausgebildet, der über die radiale Verlängerung der Zuganker bildende Zugstäbe relativ großer Länge vorgespannt ist. Die Zugstäbe stehen im Stillstand des Rotors unter Torsionsspannung; im Lauf des Rotors ist die Torsionsspannung nach Verdrehen des Rotorblatts in die Betriebsstellung jedoch wieder aufgehoben.

Die Rotorblätter 3 sind über je ein, Anstellwinkelbewegungen der Rotorblätter um ihre Längsachse ermöglichendes Wälzlager 15 mit dem zugehörigen Hohlzylinder 4 verbunden. Die Wälzlager 15 bestehen in an sich bekannter Weise aus je zwei Ringen 15a, 15b und den zwischen den Ringen angeordneten, nicht vorgespannten Wälzkörpers 15c. Die radial äußeren Ringe 15a sind starr mit den Rotorblättern verbunden, wobei die Wälzkörperbahn zweckmäßig in die Flansche eingearbeitet ist. Die radial inneren Ringe 15b sind starr mit den Wandungen der Hohlkörper 4 verbunden.

Die Druckkörper 5 sind im Schwerpunkt der "Biegemomentenfläche" der Hohlzylinder 4 angeordnet und über je zwei oder mehrere Lagerschilde 16 auf der feststehenden Achse 9 bzw. - falls der Rotor auf einer angetriebenen Welle abgestützt ist - auf der Welle abgestützt.

N/RP 03.8917

./.

- 8 -

Die die Nabe stützende Achse 9 ( bzw. Welle ) wird üblicherweise - wie in den Figuren dargestellt - waagrecht sein; sie kann aber auch gegenüber der Waagrechten geneigt sein, wie das - um einen Sicherheitsabstand vom Turm zu erhalten - bei Windkraftanlagen mit durch Seile abgespanntem Turm erforderlich sein kann. Der Neigungswinkel der Achse 9 ( bzw. Welle) kann einen Wert von z.B. +7° annehmen, wobei das Zeichen + eine Abweichung nach oben bedeutet.

Die Vorspannung über das Zugankersystem wird für den Betriebsfall so gewählt, daß kein Abheben der Flügelflansche auftreten kann. Für einige besondere Fälle, z.B. selten auftretenden Extremböen, kann es jedoch zur Verminderung der Lagerreibung, und somit kleineren Verstellkräften für die Rotorblattverstellung, vorteilhaft sein, Abheben zuzulassen. Dabei erhöht sich die Zugspannung im Zugankersystem, ohne daß - aufgrund der geringen Anzahl der Ereignisse - die Lebensdauer nennenswert beeinflußt wird. Auch können dann Zugspannungen in sonst unter Druck stehenden Hohlkörpern 4, jedoch ebenso ohne nennenswerten Lebensdauerverbrauch, auftreten, besonders dann, wenn diese an den Druckkörpern 4 durch Klammern oder Schweißen befestigt sind.

03.8917

./.

Nürnberg, 4.11.1986

P a t e n t a n s p r ü c h e

1. Mehrblattrotor für eine Windkraftanlage, mit einer auf einer Welle oder feststehenden Achse gestützten Nabe und mit über Lager um die Blattlängsachse drehbar mit der Nabe verbundenen Rotorblättern, dadurch gekennzeichnet, daß die Nabe der Zahl der Rotorblätter (3) entsprechende rotationssymmetrische Hohlkörper (4) aufweist, daß die Hohlkörper (4) auf ihrer Anzahl entsprechenden, stab- oder rohrförmigen und über Lagerschilde auf der Achse (7) oder Welle gelagerten Druckkörpern (5), deren Längsmittelachsen jeweils im oder nahezu im Schwerpunkt der Biegemomentenfläche des zugehörigen Hohlkörpers (4) liegen, gelagert sind, daß die Hohlkörper (4) über ein sternförmig ausgebildetes Zugankersystem (6, 8) mit vorgespannten, in oder nahezu in der Symmetrieachse der Hohlkörper (4) sich erstreckenden Zugstangen (8) zusammengehalten sind, und daß die Zugstangen (8) auf einen die Hohlkörper (4) nur auf Druck beanspruchenden Wert vorgespannt sind.

2. Mehrblattrotor nach Anspruch 1, dadurch gekennzeichnet, daß zwischen dem Zugankersystem (6, 8) und den die Basis der Rotorblätter (3) bildenden Flanschen (15a) Drucklager (11) sowie kegelstumpfmantelartig angeordnete Stäbe (13), Rohre, Schalen oder dergleichen angeordnet sind.

3. Mehrblattrotor nach Anspruch 1, dadurch gekennzeichnet, daß der nabennahe Teil der Rotorblätter (3) jeweils als Druckzylinder oder -kegel ausgebildet und über die Drehbarkeit der Rotorblätter (3) zulassende, verdrillte, den äußeren Teil der Zugstangen bildende, lange Stäbe vorgespannt ist.

- 2 -

4. Mehrblattrotor nach Anspruch 1 oder 2, dadurch gekennzeichnet, daß die radialen Außenteile der Zugstangen (8) durch mehrere Zugstäbe (10) gebildet sind, die mit den nabennahen Innenteilen der Zugstangen (8) fest verbunden sind.

5. Mehrblattrotor nach Anspruch 1, durch gekennzeichnet, daß als Rotorblattlager aus jeweils zwei Ringen (15a, 15b) und dazwischen angeordneten Wälzkörpern (15c) bestehende Wälzlager dienen, wobei die äußeren Ringe (15a) die starr mit den Rotorblättern (3) verbundenen Flansche bilden, und wobei die inneren Ringe (15b) starr mit den Hohlkörpern (4) verbunden sind.

Fig.2

Fig.1

0226052